# FASCICULE DE BREVET EUROPEEN

(11) **EP 2 463 531 B1**
(45) Date de publication et mention de la délivrance du brevet: **02.12.2015**
(21) Numéro de dépôt: 11192463.5
(22) Date de dépôt: 07.12.2011
(51) Int. Cl.: F16B 39/02, F16B 33/00, F16B 43/00

(54) **Ecrou de blocage et dispositif de serrage équipé dudit écrou**
Blockiermutter und mit einer solchen Mutter ausgestattete Klemmvorrichtung
Locknut and clamping device provided with said nut

(30) Priorité: 09.12.2010 FR 1060321
(43) Date de publication de la demande: 13.06.2012
(73) Titulaire: Airbus Operations (S.A.S.), 31060 Toulouse (FR)
(72) Inventeur: Bianco, Stéphane, 31500 TOULOUSE (FR); Tuery, Jean-Baptiste, 31200 TOULOUSE (FR); Chirol, Clément, 31290 TREBONS SUR LA GRASSE (FR)
(74) Mandataire: Gicquel, Olivier Yves Gérard

(56) Documents cités:
- EP-A1- 1 239 114
- DE-A1- 1 917 904
- DE-A1- 2 946 249
- DE-A1- 3 545 849
- GB-A- 915 863

## Description

La présente invention concerne un écrou de blocage utilisé dans les dispositifs de serrage par éléments filetés de type vis-écrou. L'invention concerne également un procédé d'assemblage entre plusieurs pièces au moyen d'un dispositif de serrage utilisant un tel écrou.

On connait de nombreux dispositifs de serrage du type vis-écrou pour assembler plusieurs pièces.

Le document DE 29 46 249 A1 divulgue un dispositif de serrage de pièces à assembler comprenant un écrou ayant un alésage taraudé et une tige filetée pouvant se visser dans ledit alésage fileté. L'écrou décrit dans ce document comporte un canal de distribution situé dans le corps de l'écrou, prévu sur toute la hauteur de celui-ci et permettant d'accéder audit alésage fileté.

Le document GB 915 863 A décrit un dispositif de serrage de pièces à assembler comprenant un écrou, une tige filetée, une capsule contenant un matériau de remplissage et une rondelle comportant plusieurs nervures. Ladite rondelle est positionnée entre l'assemblage de pièce et la tête de la vis, opposée à ladite capsule et permet de valider que ledit matériau de remplissage est présent sur l'ensemble des pièces à assembler.

Dans l'aéronautique, il est souvent exigé que ces dispositifs de serrage soient d'une part recouverts d'une résine isolante afin d'empêcher la corrosion de l'assemblage ainsi réalisé par le dispositif de serrage et d'autre part forment un isolant électrique.

Ainsi, un tel exemple de dispositif est notamment décrit dans le préambule du document US 4519974, montrant les éléments du dispositif de serrage dépassant de l'assemblage. L'écrou est recouvert après fixation par une couche de résine du type mastic afin d'assurer sa protection contre la corrosion.

Cependant, un tel procédé de recouvrement de l'écrou par une résine ne donne pas toujours satisfaction en termes de protection contre la corrosion. En conséquence, un but de la présente invention est d'améliorer les dispositifs de serrage existants.

A cet effet un premier objet de l'invention concerne un dispositif de serrage de pièces à assembler comprenant un écrou ayant un alésage taraudé et une tige filetée pouvant se visser dans ledit alésage, caractérisé en ce que l'écrou comprend un corps dans lequel un évidement annulaire est aménagé et au moins deux canaux adaptés pour permettre l'accès audit évidement par l'extérieur de l'écrou.

Un tel aménagement de l'écrou permet de pouvoir injecter de la résine dans l'assemblage afin de prévoir la protection à la corrosion et l'isolation électrique.

Selon une caractéristique avantageuse, l'écrou comprend en outre une embase annulaire destinée à être appliquée sur l'une des pièces à assembler, cette embase faisant saillie par rapport à la périphérie externe du corps de l'écrou et en ce que lesdits canaux sont agencés sur ladite embase.

Avantageusement, ladite embase est formée par une rondelle montée libre en rotation autour dudit écrou.

Selon encore une autre caractéristique avantageuse, les canaux ont respectivement la forme soient d'orifices ou de nervures radiales ou d'une combinaison de nervures et d'orifices.

Un second objet de la présente invention concerne un écrou de blocage mis en oeuvre dans un dispositif de serrage selon le premier objet.

Un troisième objet de la présente invention concerne un Procédé d'assemblage entre plusieurs pièces mettant en oeuvre un dispositif de serrage selon le premier objet de l'invention, chaque pièce étant pourvue d'un alésage caractérisé en ce que le procédé comprend les étapes suivantes :
a) insertion de la tige filetée dans lesdits alésages des pièces,
b) vissage de l'écrou sur la tige filetée jusqu'à ce que l'écrou soit en contact avec l'une des faces des pièces à assembler et
c) injection d'une résine isolante à l'aide d'une seringue dans l'un des canaux afin de remplir ledit évidement annulaire de résine jusqu'à ce qu'une partie de ladite résine sorte par l'un des canaux opposés.

L'invention sera mieux comprise et d'autres avantages apparaitront à la lecture de la description qui va suivre donnée à titre d'exemples non limitatifs et grâce aux dessins annexés parmi lesquels :
- La figure 1 est une vue en coupe longitudinale d'un dispositif de serrage selon la présente invention ;
- La figure 2 est une vue en perspective d'un écrou d'un dispositif de serrage de la figure 1 ;
- La figure 3 est une vue selon la flèche f de la figure 2 d'un écrou selon une variante de réalisation ; et
- Les figures 4 à 6 sont respectivement des vues en coupe longitudinales de variantes d'écrou de blocage d'un dispositif de serrage selon l'invention.

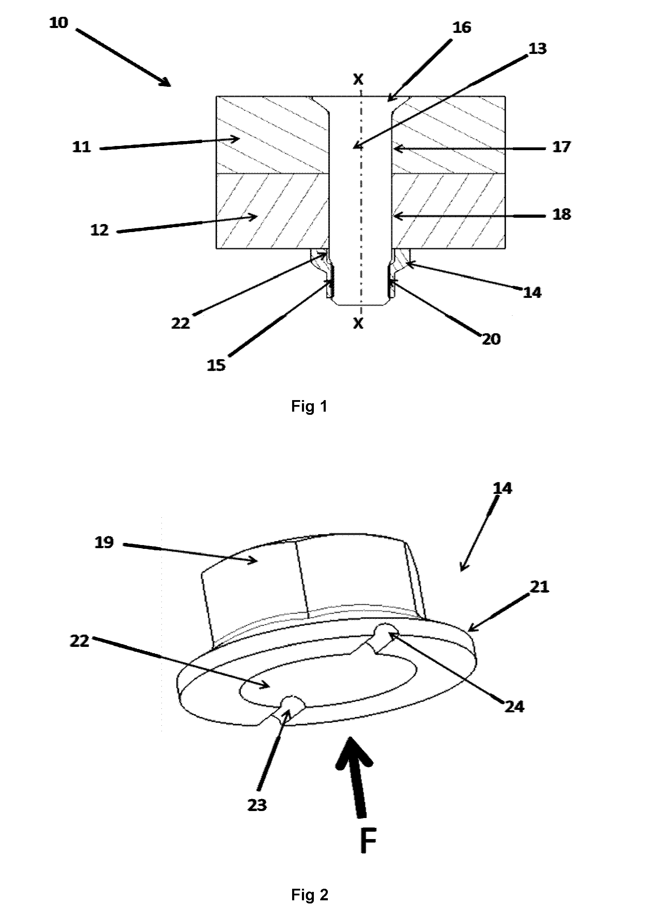

Sur la figure 1, on a représenté un dispositif de serrage 10, selon la présente invention, destiné à assembler deux pièces 11 et 12. Le dispositif de serrage 10 comprend une vis 13 et un écrou 14. La vis 13 est pourvue d'une tige filetée 15 centrée sur un axe de rotation X-X qui se prolonge à l'une de ses extrémités axiales par une tête élargie 16. Comme illustré sur la figure 1, la tête 16 est une tête plate conique.

Chaque pièce 11 et 12 est respectivement pourvue d'un alésage 17 et 18. Les alésages en position d'assemblage sont alignés par rapport à l'axe X-X de sorte que la vis 13 s'engage par sa tige filetée 15 respectivement dans les alésages 17 et 18 jusqu'à ce que la tête 16 de la vis 13 repose contre la face de la pièce 12 opposée à la pièce 11. Dans cet exemple, la tête 16 est noyée dans la pièce 12. Il sera noté que le diamètre des alésages 17 et 18 est inférieur au diamètre de la tige filetée 15 afin que l'insertion de la tige filetée dans l'alésage génère des contraintes de compression à la périphérie des trous de l'alésage permettant ainsi d'augmenter la durée de vie en fatigue au niveau de ces zones travaillantes.

L'écrou 14 s'engage sur la tige filetée 15 de la vis 13. Comme illustré sur les figures 1 et 2, l'écrou 14 comprend un corps 19 à faces latérales externes multiples de forme hexagonale pour mettre en prise un outil de rotation, afin de visser l'écrou 14 sur la tige 15. Le corps 19 comprend en son centre un alésage taraudé 20 destiné à coopérer avec la tige filetée 15 lors du vissage. Le corps 19 est prolongé à une extrémité axiale dirigée vers la face de la pièce 11, en position d'assemblage, par une embase annulaire 21. Cette embase 21 est un disque plan qui fait saillie par rapport à la périphérie externe du corps 19 de l'écrou 14. Cette embase 21 est en outre pourvue d'un évidement annulaire 22 centré sur l'axe X-X qui présente une paroi latérale cylindrique de diamètre supérieur au diamètre de l'alésage taraudé 20. L'embase 21 comporte sur sa face externe au moins deux nervures radiales 23,24. Comme visible à la figure 2, ces deux nervures 23 et 24 sont réalisées et disposées de part et d'autre de l'axe longitudinal X-X et sont alignées entre elles. Chaque nervure 23, 24 a une forme en demi-cercle en coupe transversale débouchant dans l'évidement annulaire 22. Lors de l'assemblage des deux pièces 11 et 12, la vis 13 est enserrée dans les alésages 17 et 18 puis par un couple de serrage sur la tige filetée 18 dans une direction de rotation autour de l'axe X-X. La tête 16 de la vis 13 s'engage dans la pièce 12 et l'embase 21 de l'écrou 14 est en contact avec la face de la pièce 11 qui est opposée à la pièce 12. L'extrémité d'une seringue remplie d'une résine isolante du type mastic ou d'une résine polyuréthane est insérée dans l'ouverture ou canal défini entre la face de la pièce 11 et la nervure 23 afin d'injecter dans l'évidement annulaire 22 de la résine isolante jusqu'à ce que la résine sorte par l'ouverture opposée définie entre la face de la pièce 11 et la nervure 24 indiquant ainsi que l'évidement annulaire est complètement rempli de résine.

Un tel procédé d'assemblage d'un moins deux pièces métalliques, composites ou mixtes au moyen du dispositif de serrage tel que décrit ci-dessus permet d'assurer une étanchéité dans l'assemblage et également de former un isolant électrique de l'assemblage.

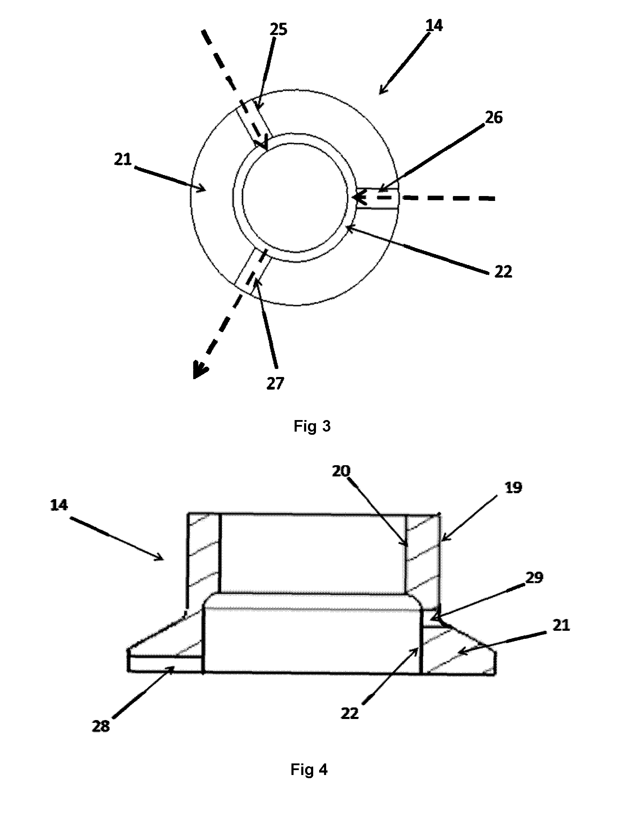

Selon une variante de réalisation représentée à la figure 3, l'écrou 14 est pourvu de trois nervures (ou canaux) radiales 25, 26, 27 réalisées sur la face externe de l'embase 21. Ces nervures 25, 26 et 27 sont disposées de manière équidistante autour de l'embase 21.

Dans une telle variante, le procédé d'injection de la résine est réalisé en injectant la résine dans une première nervure 25 au moyen d'une seringue puis dans une seconde nervure 26 de manière à chasser un maximum de bulles d'air dans l'évidement annulaire 22 et jusqu'à l'évacuation de la résine au travers de la troisième nervure 27. On comprend dans cet exemple que l'écrou 14 comprend une nervure 27 d'évacuation et deux nervures 25 et 26 d'entrée de résine.

Selon encore une variante de ce mode de réalisation représenté à la figure 4, l'embase 21 de l'écrou 14 est pourvue d'une nervure 28 et le corps 19 de l'écrou comprend un orifice 29 débouchant dans l'évidement annulaire 22.

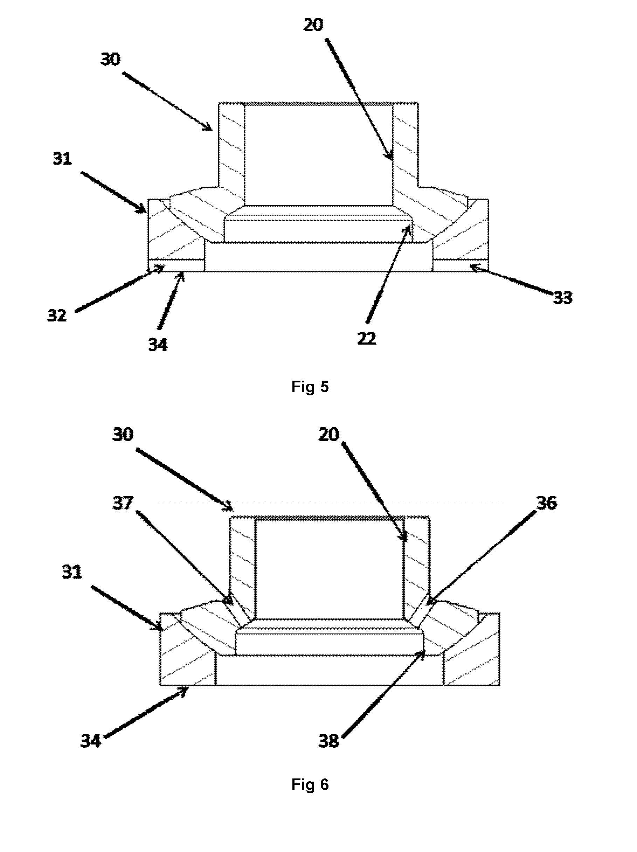

Un tel écrou 14 permet d'injecter la résine au niveau de l'embase 21 de l'écrou 14 dans la nervure 23 et de stopper l'injection de la résine lorsque la résine et l'air s'échappent par l'orifice 29, garantissant ainsi que l'évidement annulaire est totalement rempli de résine. Selon un autre mode de réalisation représenté aux figures 5 et 6, l'écrou 30 est équipé d'une rondelle 31, fixée libre en rotation autour de l'écrou. Ce type d'écrou est généralement désigné écrou à rotule.

La rondelle 31 est, en position d'assemblage, interposée entre l'écrou 30 et la pièce à serrer.

Comme déjà illustré, selon une première variante, la rondelle 31 est pourvue de deux nervures radiales 32, 33 réalisées sur la face externe 34 de la rondelle 31, et disposées de part et d'autre de l'axe longitudinal X-X et alignées entre elles. On notera que dans un tel cas, le procédé d'assemblage est identique au premier mode de réalisation décrit.

Selon une autre variante à ce mode de réalisation, la base du corps 19 de l'écrou 30 comprend deux orifices respectivement un orifice d'entrée 37 et un orifice de sortie 36 en communication avec l'évidement annulaire 38 de l'écrou 30. Chaque orifice 36, 37 étant disposé de part et d'autre de l'axe longitudinal X-X. De manière similaire au procédé décrit ci-dessus, la résine est injectée dans l'orifice d'entrée 37 jusqu'à ce que la résine soit évacuée par l'orifice de sortie 36.

Bien entendu, la présente invention n'est pas limitée aux modes de réalisation décrits ci-dessus et peut s'étendre à toutes variantes conformes à son esprit. Ainsi, par exemple, le nombre d'orifices ou de nervures désignés également canaux n'est pas limité à deux ou trois et leur agencement peut être une combinaison d'orifices et de nervures. En outre la forme de la nervure n'est pas limitée à une forme en demi-cercle en coupe transversale mais peut également avoir une forme en « V » en coupe transversale.

## Revendications

1. Dispositif de serrage (10) de pièces à assembler comprenant un écrou (14) ayant un alésage taraudé (20) et une tige filetée (15) pouvant se visser dans ledit alésage (20), **caractérisé en ce que** l'écrou (14) comprend un corps (19) dans lequel un évidement annulaire (22, 38) centré sur un axe central de l'écrou (14) et présentant une paroi latérale cylindrique de diamètre supérieur au diamètre de l'alésage (20) est aménagé et au moins deux canaux (23,24 ; 25,26,27 ; 28, 29 ; 32,33 ; 36, 37) adaptés pour permettre l'accès audit évidement (20) par l'extérieur de l'écrou.

2. Dispositif selon la revendication 1, **caractérisé en ce que** l'écrou (14) comprend en outre une embase annulaire (21, 31) destinée à être appliquée sur l'une des pièces à assembler, cette embase (21, 31) faisant saillie par rapport à la périphérie externe du corps (19) de l'écrou et **en ce que** lesdits canaux (23,24 ; 25,26,27 ; 28, 29 ; 32,33 ; 36, 37) sont agencés sur ladite embase (21, 31).

3. Dispositif selon la revendication 2, **caractérisé en ce que** ladite embase est formée par une rondelle (31) montée libre en rotation autour dudit écrou (14).

4. Dispositif selon l'une quelconque des revendications précédentes, **caractérisé en ce que** les canaux (23,24 ; 25,26,27 ; 28, 29 ; 32,33 ; 36, 37) ont respectivement la forme soit d'orifices (37,36) ou de nervures radiales (23,24 ; 25,26,27 ; 32,33) ou d'une combinaison de nervures (28) et d'orifices (29).

5. Dispositif selon la revendication 4, **caractérisé en ce que** les canaux (23,24 ; 25,26, 27 ; 32,33) ont la forme de nervures, lesdites nervures étant disposées de manière équidistance autour de l'embase.

6. Ecrou de blocage (14, 30) mis en oeuvre dans un dispositif de serrage selon l'une des revendications précédentes.

7. Procédé d'assemblage entre plusieurs pièces (11, 12) mettant en oeuvre un dispositif de serrage (10) selon l'une des revendications 1 à 5, chaque pièce (11, 12) étant pourvue d'un alésage (17, 18) **caractérisé en ce que** le procédé comprend les étapes suivantes :
a) insertion de la tige filetée (15) dans lesdits alésages des pièces,
b) vissage de l'écrou sur la tige fileté jusqu'à ce que l'écrou (14, 30) soit en contact avec l'une des faces des pièces à assembler et
c) injection d'une résine isolante à l'aide d'une seringue dans l'un des canaux (23,24 ; 25,26,27 ; 28, 29 ; 32,33 ; 36, 37) afin de remplir ledit évidement annulaire (22, 38) de résine jusqu'à ce qu'une partie de ladite sorte par l'un des canaux opposés.

## Patentansprüche

1. Vorrichtung (1 0) zum Klemme n von zusammenzufügenden Teilen, umfassend eine Mutter (14) mit einer Gewindebohrung (20) und einen Gewindeschaft (15), der in die Bohrung (20) eingeschraubt werden kann, **dadurch gekennzeichnet, dass** die Mutter (14) einen Körper (19), in dem eine ringförmige Ausnehmung (22, 38), die auf eine mittlere Achse der Mutter (14) zentriert ist und eine zylindrische Seitenwand mit einem Durchmesser, der größer ist als der Durchmesser der Bohrung (20), aufweist, ausgebildet ist, und mindestens zwei Kanäle (23, 24; 25, 26, 27; 28, 29; 32, 33; 36, 37), die dazu ausgeführt sind, Zugang zu der Ausnehmung (22) von außerhalb der Mutter zu gestatten, umfasst.

2. Vorrichtung nach Anspruch 1, **dadurch gekennzeichnet, dass** die Mutter (14) ferner eine ringförmige Basis (21, 31) umfasst, die gegen eines der zusammenzufügenden Teile drücken soll, wobei diese Basis (21, 31) bezüglich des Außenumfangs des Körpers (19) der Mutter vorsteht, und dass die Kanäle (23, 24; 25, 26, 27; 28, 29; 32, 33; 36, 37) an der Basis (21, 31) angeordnet sind.

3. Vorrichtung nach Anspruch 2, **dadurch gekennzeichnet, dass** die Basis durch eine Scheibe (31) gebildet wird, die frei drehbar um die Mutter (14) angebracht ist.

4. Vorrichtung nach einem der vorhergehenden Ansprüche, **dadurch gekennzeichnet, dass** die Kanäle (23, 24; 25, 26, 27; 28, 29; 32, 33; 36, 37) jeweils entweder die Form von Öffnungen (37, 36) oder von radialen Rippen (23, 24; 25, 26, 27; 32, 33) oder eine Kombination aus Rippen (28) und Öffnungen (29) aufweisen.

5. Vorrichtung nach Anspruch 4, **dadurch gekennzeichnet, dass** die Kanäle (23, 24; 25, 26, 27; 32, 33) die Form von Rippen aufweisen, wobei die Rippen in einem gleichen Abstand um die Basis angeordnet sind.

6. Bei einer Klemmvorrichtung nach einem der vorhergehenden Ansprüche eingesetzte Sicherungsmutter (14, 30).

7. Eine Klemmvorrichtung (10) nach einem der Ansprüche 1 bis 5 einsetzendes Verfahren zum Zusammenfügen mehrerer Teile (11, 12), wobei jedes Teil (11, 12) mit einer Bohrung (17, 18) versehen ist, **dadurch gekennzeichnet, dass** das Verfahren die folgenden Schritte umfasst:
a) Einführen des Gewindeschafts (15) in die Bohrungen der Teile,
b) Schrauben der Mutter auf den Gewindeschaft, bis die Mutter (14, 30) mit einer der Flächen der zusammenzufügenden Teile in Kontakt kommt, und
c) Einspritzen eines isolierenden Harzes mit Hilfe einer Spritze in einen der Kanäle (23, 24; 25, 26, 27; 28, 29; 32, 33; 36, 37), um die ringförmige Ausnehmung (22, 38) mit Harz zu füllen, bis ein Teil des letzteren durch einen der gegenüberliegenden Kanäle austritt.

## Claims

1. Device (10) for clamping parts to be assembled, comprising a nut (14) having a tapped bore (20) and a threaded rod (15) which is able to screw into said bore (20), **characterized in that** the nut (14) comprises a body (19) in which there is created an annular cavity (22, 38) which is centred on a central axis of the nut (14) and has a cylindrical side wall of diameter greater than the diameter of the bore (20), and at least two ducts (23, 24; 25, 26, 27; 28, 29; 32, 33; 36, 37) designed to allow access to said cavity (22) via the exterior of the nut.

2. Device according to Claim 1, **characterized in that** the nut (14) further comprises an annular base (21, 31) designed to be fitted onto one of the parts to be assembled, this base (21, 31) projecting with respect to the external periphery of the body (19) of the nut and **in that** said ducts (23, 24; 25, 26, 27; 28, 29; 32, 33; 36, 37) are arranged on said base (21, 31).

3. Device according to Claim 2, **characterized in that** said base is formed by a washer (31) which is mounted so as to be able to rotate freely about said nut (14).

4. Device according to any one of the preceding claims, **characterized in that** the ducts (23, 24; 25, 26, 27; 28, 29; 32, 33; 36, 37) are, respectively, in the form either of orifices (36, 37) or of radial ribs (23, 24; 25, 26, 27; 32, 33) or of a combination of ribs (28) and orifices (29).

5. Device according to Claim 4, **characterized in that** the ducts (23, 24; 25, 26, 27; 32, 33) are in the form of ribs, said ribs being arranged in an equidistant manner around the base.

6. Locknut (14, 30) employed in a clamping device according to one of the preceding claims.

7. Method for assembling several parts (11, 12) employing a clamping device (10) according to one of Claims 1 to 5, each part (11, 12) being provided with a bore (17, 18), **characterized in that** the method comprises the following steps:
a) inserting the threaded rod (15) into said bores of the parts,
b) screwing the nut onto the threaded rod until the nut (14, 30) is in contact with one of the faces of the parts to be assembled and
c) injecting an insulating resin, with the aid of a syringe, into one of the ducts (23, 24; 25, 26, 27; 28, 29; 32, 33; 36, 37) in order to fill said annular cavity (22, 38) with resin until some of the latter exits via one of the opposite ducts.
